# EUROPEAN PATENT APPLICATION

(11) **EP 3 608 696 A1**
(43) Date of publication of application: **12.02.2020**
(21) Application number: 18781439.7
(22) Date of filing: 02.04.2018
(51) Int. Cl.: G02B 5/30, B32B 7/02, B32B 27/06, G02C 7/10

(54) **OPTICAL FILM FOR EYEWEAR WITH LIGHT-BLOCKING FUNCTION, OPTICAL LAMINATE USING SAME AND EYEWEAR WITH LIGHT-BLOCKING FUNCTION**

(30) Priority: 06.04.2017 JP 2017076022
(71) Applicant: Nippon Kayaku Kabushiki Kaisha, Tokyo 100-0005 (JP)
(72) Inventor: YAHAGI, Yoshiyuki, Tokyo 115-8588 (JP); TANAKA, Kouichi, Tokyo 100-0005 (JP)
(74) Representative: Hentrich Patentanwälte PartG mbB
(86) International application number: PCT/JP2018/014172
(87) International publication number: WO 2018/186369

(57) **Abstract**

A light-shielding function equipped optical film for eyewear according to the present invention includes at least one light reflection layer including a cholesteric liquid crystal layer having a central reflected wavelength in a wavelength region of 400 nm to 500 nm inclusive, the light reflection layer is disposed on an outermost side with respect to an eyewear wearer side, and the light-shielding function equipped optical film for eyewear has a visible light average transmittance equal to or higher than 60%.

## Description

### Technical Field

The present invention relates to a light-shielding function equipped optical film for eyewear used in light-shielding function equipped eyewear (such as glasses, sunglasses, goggles, and a helmet visor) used for protection glasses for reducing glare after a cataract operation and the like, and an optical laminate and a light-shielding function equipped eyewear using the light-shielding function equipped optical film for eyewear.

### Background Art

In a known method of medical treatment of cataract in which white is generated in the crystalline lens of an eye, an operation is performed to remove the clouded lens and insert an artificial crystalline lens (intraocular lens) into the eye as a replacement. After the operation, the eye recovers the visual power but blue light is likely to enter into the eye than before the cataract operation because the intraocular lens typically transmits light on the short wavelength side. Furthermore, the cloud in the crystalline lens is abruptly removed, and as a result, a large amount of external light enters into the intraocular lens, causing further glare in some cases.

Protection glasses for reducing glare are normally used as an antiglare measure after a cataract operation. Such protection glasses are commercially available, and mainly include a light absorbing lens such as a plastic lens dyed with a light absorption pigment.

In this manner, protection glasses after a cataract operation are normally glasses that achieve glare reduction, in other words, glasses which have a light-shielding property, and various types of light-shielding properties exist. In addition, protection glasses in which a light absorption pigment or the like is used absorb light in the visible light range other than blue light as an absorption target, which adversely leads to darker eyesight than needed.

### Summary of Invention

### Technical Problem

It is an object of the present invention to provide a light-shielding function equipped optical film for eyewear that is capable of efficiently cutting blue light while avoiding too dark eyesight and is optimum mainly for protection glasses after a cataract operation, and an optical laminate and a light-shielding function equipped eyewear using the light-shielding function equipped optical film for eyewear.

### Solution to Problem

The present inventors found that an optical film including at least one light reflection layer on the outermost side with respect to an eyewear wearer side, the at least one light reflection layer including a cholesteric liquid crystal layer having a central reflected wavelength in a wavelength region of 400 nm to 500 nm inclusive, has a high visible light average transmittance together with a function of reducing glare by cutting blue light. The present inventors have newly found that the optical film having such a function can be applied to eyewear to obtain eyewear having a high light-shielding property and capable of efficiently cutting blue light while avoiding too dark eyesight.

Specifically, the present invention relates to the following.
[1] A light-shielding function equipped optical film for eyewear including at least one light reflection layer including a cholesteric liquid crystal layer having a central reflected wavelength in a wavelength region of 400 nm to 500 nm inclusive, in which
   the at least one light reflection layer is disposed on an outermost side with respect to an eyewear wearer side, and
   the light-shielding function equipped optical film for eyewear has a visible light average transmittance equal to or higher than 60%.
[2] The light-shielding function equipped optical film for eyewear according to [1], in which the at least one light reflection layer includes
   at least one light reflection layer R including a cholesteric liquid crystal layer having right-handed helical orientation, and
   at least one light reflection layer L including a cholesteric liquid crystal layer having left-handed helical orientation.
[3] The light-shielding function equipped optical film for eyewear according to [1] or [2], further including at least one linear polarization element layer, in which
   the linear polarization element layer is disposed on the eyewear wearer side of the at least one light reflection layer with respect to the wearer side.
[4] An optical laminate including:
   a first support body,
   a second support body, and
   the light-shielding function equipped optical film for eyewear according to any of [1] to [3] disposed between the first support body and the second support body.
[5] The optical laminate according to [4], in which both or one of the first support body and the second support body is a substrate formed of a plastic material.
[6] A light-shielding function equipped eyewear including the optical film according to any one of [1] to [3] or the optical laminate according to [4] or [5].

### Effects of Invention

According to the present invention, it is possible to provide a light-shielding function equipped optical film for eyewear that is capable of efficiently cutting blue light while avoiding too dark eyesight and is optimum mainly for protection glasses after a cataract operation, and an optical laminate and a light-shielding function equipped eyewear using the light-shielding function equipped optical film for eyewear.

The eyewear according to the present invention can have, for example, mirror-like designability, and thus it is possible to provide excellently fashionable eyewear.

### Brief Description of Drawings

[Fig. 1] A graph illustrating spectrum data of the transmittance of optical films used in Examples 1 to 3.
[Fig. 2] A graph illustrating spectrum data of the transmittance of optical lenses used in Comparative Examples 1 to 3.

### Description of Embodiments

Embodiments of the present invention will be described below in detail. The following embodiments are merely some typical exemplary embodiments of the present invention, and various kinds of additional changes may be performed within the scope of the present invention.

### <Optical film>

A light-shielding function equipped optical film for eyewear according to the present invention (hereinafter also referred to as "optical film for eyewear" or "optical film") includes at least one light reflection layer including a cholesteric liquid crystal layer having a central reflected wavelength in a wavelength region of 400 nm to 500 nm inclusive, and the at least one light reflection layer is disposed on the outermost side with respect to an eyewear wearer side. The outermost side with respect to the eyewear wearer side is a side on which light is incident on the optical film when the optical film is applied to eyewear, and corresponds to the "front side" of the optical film. The eyewear wearer side corresponds to the "back side" of the optical film. Thus, when the optical film is directly applied to the eyewear, the light reflection layer is disposed on the frontmost side of the optical film in a basic disposition structure. The light reflection layer included in the optical film may be directly formed on the outermost side of the optical film, or may be formed through a bonding layer.

In this manner, the light reflection layer included in the optical film includes a cholesteric liquid crystal layer having a central reflected wavelength in a wavelength region on the short wavelength side, and thus has-polarized light capability of selectively reflecting light in a wavelength region of blue light. Accordingly, it is possible to obtain an optical film having a light-shielding function of reducing glare by efficiently cutting blue light, and capable of ensuring sufficient transmission of light in a visible light range. The optical film has a visible light average transmittance equal to or higher than 60%, preferably equal to or higher than 65%, more preferably equal to or higher than 70%. Since the light-shielding function equipped optical film for eyewear has a visible light average transmittance equal to or higher than 60%, luminance in the visible light range is encumbered, thereby preventing too dark eyesight. Accordingly, the optical film according to the present invention has such an excellent function and thus is optimum for application to protection glasses after a cataract operation.

### (Light reflection layer)

The light reflection layer used in the present invention includes the cholesteric liquid crystal layer having a central reflected wavelength in a wavelength region of 400 nm to 500 nm inclusive. Since the light reflection layer has a reflection band, the reflected wavelength of the light reflection layer is expressed by using the central reflected wavelength as the central value of the reflection band. The central reflected wavelength means the central wavelength of the reflection band of the light reflection layer, and can be defined as a value, for example, at middle between wavelengths on the short wavelength side and the long wavelength side at which the transmittance is 75% in the reflection band in spectrometry. For example, when spectrometry of a light reflection layer obtains the wavelength of 400 nm on the short wavelength side and the wavelength of 500 nm on the long wavelength side, at which the transmittance is 75% in the reflection band, the central reflected wavelength of this light reflection layer is 450 nm. The transmittance used as a reference in calculation of the central reflected wavelength is optional and selected as appropriate depending on, for example, a waveform shape and the lowest transmittance of the reflection band. The waveform is not necessarily bilaterally symmetric. The transmittance of the lowest transmittance value + 5 to 50% may be used as a reference because an interference band exists near the reflection band in some cases.

The light reflection layer may be a single layer or a laminate of two or more layers. The light reflection layer may include one or both of a light reflection layer R including a cholesteric liquid crystal layer having right-handed helical orientation and a light reflection layer L including a cholesteric liquid crystal layer having left-handed helical orientation. The cholesteric liquid crystal layer having right-handed helical orientation has a property of reflecting clockwise circularly polarized light (right-handed circularly polarized light), and the cholesteric liquid crystal layer having left-handed helical orientation has a property of reflecting counterclockwise circularly polarized light (left-handed circularly polarized light). Since circularly polarized light has no polarization axis unlike linearly polarized light, high reflectance can be easily and reliably obtained only by selecting which of right-handed circularly polarized light and left-handed circularly polarized light is to be reflected by the light reflection layer. When the optical film according to the present invention includes two or more light reflection layers, the light reflection layers may reflect light circularly polarized in an identical direction, or may reflect light circularly polarized in opposite directions. For example, when three light reflection layers L are included as light reflection layers, the cholesteric liquid crystal layers included in the respective light reflection layers L all have a property of reflecting left-handed circularly polarized light. The number of laminated light reflection layers is not particularly limited, but is preferably one to five, more preferably one to three. When a plurality of light reflection layers are laminated, blue light can be more efficiently cut and the reflected wavelength region can be increased as necessary, but the number of laminated light reflection layers is preferably one to five from viewpoints of, for example, the number of manufacture processes and cost. The thickness of each light reflection layer is preferably 0.2 to 5 µm, more preferably 0.8 to 4 µm. When the thickness of each light reflection layer is smaller than 0.2 µm, the reflectance of a light reflection film formed by the light reflection layers potentially decreases. When the thickness of each light reflection layer is larger than 5 µm, defect occurs in orientation of cholesteric liquid crystals included in the light reflection layer, and the haze value of a light reflection film formed by the light reflection layers potentially increases.

When a plurality of light reflection layers are laminated, all light reflection layers may reflect light circularly polarized in an identical direction, that is, may include either light reflection layers R or light reflection layers L, or may include light reflection layers R and L. In the present invention, in particular, at least one light reflection layer R and at least one light reflection layer L are preferably included. When both of the light reflection layer R and the light reflection layer L are included, the difference between the central reflected wavelengths of the light reflection layers is preferably equal to or smaller than 20 nm. When the difference between the central reflected wavelengths is equal to or smaller than 20 nm, for example, left-handed circularly polarized light or right-handed circularly polarized light transmitted through the light reflection layer R or the light reflection layer L is further reflected by the light reflection layer L or the light reflection layer R that reflects the transmitted circularly polarized light, and accordingly, blue light can be more efficiently cut.

When three or more light reflection layers are laminated, the haze value of the entire light reflection layer is preferably equal to or smaller than 1.0%, more preferably equal to or smaller than 0.8%. When the haze value is larger than 1.0%, the light reflection layer has a large opacity, and is not suitable for application to an optical member for which transparency is important.

The haze value of the light reflection layer including both of the light reflection layer R and the light reflection layer L is preferably equal to or smaller than 1.0%, more preferably equal to or smaller than 0.8%. When the haze value is larger than 1.0%, the light reflection layer has a large opacity, and is not suitable for application to an optical member for which transparency is important.

The reflectance or transmittance of each light reflection layer can be optionally adjusted, and the transmittance is preferably 5% to 90% inclusive, more preferably 10% to 80% inclusive. Adjustment of the transmittance can be controlled through the thickness of the cholesteric liquid crystal layer. The thickness of the cholesteric liquid crystal layer is preferably 0.2 to 5 µm, more preferably 0.8 to 4 µm. When the thickness of each light reflection layer is smaller than 0.2 µm or larger than 5 µm, defect occurs in orientation of cholesteric liquid crystals included in the light reflection layer, and the haze value of a light reflection film formed by the light reflection layers potentially increases.

The cholesteric liquid crystal layer is formed of a nematic liquid crystal having chirality, or a composition obtained by adding a chiral agent to a nematic liquid crystal. Helical orientation and reflected wavelength can be optionally designed by selecting the kind and amount of the chiral agent, and thus it is preferable to employ a method of obtaining a cholesteric liquid crystal by adding a chiral agent to a nematic liquid crystal. Unlike a liquid crystal that operates in an electric field, the nematic liquid crystal in the present invention is used while the helical orientation thereof is fixed, and thus it is preferable to use a nematic liquid crystal monomer containing a polymerizable group.

The nematic liquid crystal monomer containing a polymerizable group is a compound containing the polymerizable group in a molecule and having liquid crystallinity in a certain temperature range or a certain concentration range. Examples of the polymerizable group include a (meth)acryloyl group, a vinyl group, a chalconyl group, a cinnamoyl group, and an epoxy group. It is preferable that a mesogenic group is contained in a molecule for a polymerizable liquid crystal to have liquid crystallinity. The mesogenic group is, for example, a rod-shaped or plate-shaped substituent group such as a biphenyl group, a terphenyl group, a (poly)phenyl benzoate group, a (poly)ether group, a benzylideneaniline group, and an acenaphthoquinoxaline group, or a disk-shaped substituent group such as a triphenylene group, a phthalocyanine group, and an azacrown group. Thus, the mesogenic group is a group capable of inducing liquid crystal phase behavior. A liquid crystal compound containing a rod-shaped or plate-shaped group is known as a calamitic liquid crystal in the present technical field. Examples of nematic liquid crystal monomers containing such a polymerizable group include polymerizable liquid crystals disclosed in Japanese Patent Application Laid-Open No. 2003-315556 and Japanese Patent Application Laid-Open No. 2004-29824, Paliocolor (registered trademark) series (manufactured by BASF Ltd.) such as Paliocolor LC242 and Paliocolor LC1057, and RMM series (manufactured by Merck KGaA). These nematic liquid crystal monomers containing a polymerizable group may be used alone or may be used in combinations of two or more.

The chiral agent is preferably a compound that is capable of adjusting the orientation of the above-described nematic liquid crystal monomer containing a polymerizable group to right-handed helical orientation or left-handed helical orientation and contains a polymerizable group like the nematic liquid crystal monomer containing a polymerizable group. Such a chiral agent is, for example, Paliocolor LC756 (manufactured by BASF Ltd.), an optically active compound each having a binaphthyl structure, which is disclosed in, for example, Japanese Patent Application Laid-Open No. 2002-179668 or Japanese Patent Application Laid-Open No. 2007-271808, or an optically active compound having an isosorbide structure disclosed in, for example, Japanese Patent Application Laid-Open No. 2003-306491, or Japanese Patent Application Laid-Open No. 2003-313292. The direction of circularly polarized light to be reflected is determined by the kind of the chiral agent, and the reflected wavelength of a light reflection layer can be changed in accordance with the amount of the chiral agent added to nematic liquid crystal. For example, a light reflection layer that reflects light having a wavelength on a shorter wavelength side can be obtained by increasing the amount of the added chiral agent. The amount of the added chiral agent differs depending on the kind and reflected wavelength of the chiral agent, but is preferably 0.5 to 30 parts by weight approximately based on 100 parts by weight of the nematic liquid crystal monomer containing a polymerizable group, more preferably 1 to 20 parts by weight approximately, to adjust the central reflected wavelength of a light reflection layer for normal light to a desired wavelength region.

In addition, a polymerizable compound that can react with the nematic liquid crystal monomer containing a polymerizable group and has no liquid crystallinity may be added. Such a compound is, for example, ultraviolet curable resin. Examples of the ultraviolet curable resin include dipentaerythritol hexa(meth)acrylate, a reaction product of dipentaerythritol penta(meth)acrylate and 1,6-hexamethylene-di-isocyanate, a reaction product of isocyanuric-ring-containing tri-isocyanate and pentaerythritol tri(meth)acrylate, a reaction product of pentaerythritol tri(meth)acrylate and isophorone-di-isocyanate, dipentaerythritol penta(meth)acrylate, dipentaerythritol tetra(meth)acrylate, pentaerythritol tetra(meth)acrylate, pentaerythritol tri(meth)acrylate, trimethylolpropane tri(meth)acrylate, ditrimethylolpropane tetra(meth)acrylate, tris (acryloxyethyl)isocyanurate, tris (methacryloxyethyl)isocyanurate, a reaction product of glycerol triglycidyl ether and (meth)acrylic acid, caprolactone denaturation tris (acryloxyethyl)isocyanurate, a reaction product of trimethylolpropane triglycidyl ether and (meth)acrylic acid, triglycerol-di-(meth)acrylate, a reaction product of propylene glycol-di-glycidyl ether and (meth)acrylic acid, polypropylene glycol-di-(meth)acrylate, tripropylene glycol-di-(meth)acrylate, polyethylene glycol-di-(meth)acrylate, tetraethylene glycol-di-(meth)acrylate, triethylene glycol-di-(meth)acrylate, pentaerythritol-di-(meth)acrylate, a reaction product of 1,6-hexanediol-di-glycidyl ether and (meth)acrylic acid, 1,6-hexanediol-di-(meth)acrylate, glycerol-di-(meth)acrylate, a reaction product of ethylene glycol-di-glycidyl ether and (meth)acrylic acid, a reaction product of diethylene glycol-di-glycidyl ether and (meth)acrylic acid, bis (acryloxyethyl)hydroxyethyl isocyanurate, bis (methacryloxyethyl)hydroxyethyl isocyanurate, a reaction product of bisphenol A-di-glycidyl ether and (meth)acrylic acid, tetrahydrofurfuryl (meth)acrylate, caprolactone denaturation tetrahydrofurfuryl (meth) acrylate, 2-hydroxyethyl (meth) acrylate, 2-hydroxypropyl (meth)acrylate, polypropylene glycol (meth)acrylate, polyethylene glycol (meth)acrylate, phenoxy hydroxypropyl (meth)acrylate, acryloyl morpholine, methoxy polyethylene glycol (meth) acrylate, methoxy tetraethylene glycol (meth)acrylate, methoxy triethylene glycol (meth)acrylate, methoxy ethylene glycol (meth)acrylate, methoxy ethyl (meth)acrylate, glycidyl (meth)acrylate, glycerol (meth)acrylate, ethyl carbitol (meth)acrylate, 2-ethoxyethyl (meth)acrylate, N,N-dimethylaminoethyl (meth)acrylate, 2-cyanoethyl (meth)acrylate, a reaction product of butyl glycidyl ether and (meth)acrylic acid, butoxy triethylene glycol (meth)acrylate, and butanediol mono(meth)acrylate. These resins may be used alone or may be used as a mixture of some of the resins. These ultraviolet curable resins having no liquid crystallinity need to be added in such an amount that a composition containing the nematic liquid crystal monomer does not lose liquid crystallinity, and the amount added is preferably 0.1 to 20 parts by weight based on 100 parts by weight of the nematic liquid crystal monomer containing a polymerizable group, more preferably 1.0 to 10 parts by weight approximately.

When the above-described nematic liquid crystal monomer containing a polymerizable group or any other polymerizable compound is ultraviolet curable, a photopolymerization initiator is further added to the composition for ultraviolet curing. Examples of the photopolymerization initiator include: 2-methyl-1-[4-(methylthio)phenyl]-2-morpholinopropane-1 (Irgacure 907 manufactured by BASF Ltd.), 1-hydroxy cyclohexyl phenyl ketone (Irgacure 184 manufactured by BASF Ltd.), 4-(2-hydroxyethoxy)-phenyl(2-hydroxy-2-propyl) ketone (Irgacure 2959 manufactured by BASF Ltd.), 1-(4-dodecylphenyl)-2-hydroxy-2-methylpropan-1-one (Darocure 953 manufactured by Merck KGaA), 1-(4-isopropylphenyl)-2-hydroxy-2-methylpropan-1-one (Darocure 1116 manufactured by Merck KGaA), 2-hydroxy-2-methyl-1-phenylpropan-1-one (Irgacure 1173 manufactured by BASF Ltd.), an acetophenone compound such as diethoxyacetophenone; benzoin compounds such as benzoin, benzoin methyl ether, benzoin ethyl ether, benzoin isopropyl ether, benzoin isobutyl ether, and 2,2-dimethoxy-2-phenylacetophenone (Irgacure 651 manufactured by BASF Ltd.); benzophenone compounds such as benzoylbenzoic acid, methyl benzoylbenzoate, 4-phenylbenzophenone, hydroxybenzophenone, 4-benzoyl-4'-methyldiphenyl sulfide, and 3,3'-dimethyl-4-methoxybenzophenone (Kayacure MBP manufactured by Nippon Kayaku Co., Ltd.); and thioxanthone compounds such as thioxanthone, 2-chlorothioxanthone (Kayacure CTX manufactured by Nippon Kayaku Co., Ltd.), 2-methylthioxanthone, 2,4-dimethylthioxanthone (Kayacure RTX manufactured by Nippon Kayaku Co., Ltd.), isopropyl thioxanthone, 2,4-dichlorothioxanthone (Kayacure CTX manufactured by Nippon Kayaku Co., Ltd.), 2,4-diethylthioxanthone (Kayacure DETX manufactured by Nippon Kayaku Co., Ltd.), or 2,4-diisopropylthioxanthone (Kayacure DITX manufactured by Nippon Kayaku Co., Ltd.). The photopolymerization initiator is preferably, for example, Irgacure TPO, Irgacure TPO-L, Irgacure OXE01, Irgacure OXE02, Irgacure 1300, Irgacure 184, Irgacure 369, Irgacure 379, Irgacure 819, Irgacure 127, Irgacure 907, or Irgacure 1173 (all manufactured by BASF Ltd.), more preferably, Irgacure TPO, Irgacure TPO-L, Irgacure OXE01, Irgacure OXE02, Irgacure 1300, or Irgacure 907. These photopolymerization initiators may be used alone or may be used as a mixture of some of the initiators at an optional ratio. In particular, it is preferable to use at least one kind of a photopolymerization initiator having an absorption band at a wavelength equal to or longer than 300 nm.

When a benzophenone compound or a thioxanthone compound is used as the photopolymerization initiator, an auxiliary agent may be additionally used to promote optical polymerization reaction. Examples of such an auxiliary agent include amine compounds such as triethanolamine, methyldiethanolamine, triisopropanolamine, n-butylamine, N-methyldiethanolamine, diethylaminoethyl methacrylate, Michler's ketone, 4,4'-diethylamin phenone, ethyl 4-dimethylaminobenzoate, (n-butoxy)ethyl 4-dimethylaminobenzoate, and isoamyl 4-dimethylaminobenzoate.

The amounts of the photopolymerization initiator and the auxiliary agent added can be in such a range that the liquid crystallinity of the composition containing a nematic liquid crystal is not affected. The amount of the photopolymerization initiator added is preferably 0.5 to 10 parts by weight, more preferably 2 to 8 parts by weight approximately, based on 100 parts by weight of ultraviolet-curable compound in the composition. The amount of the auxiliary agent added to the composition is preferably 0.5 to 2 times larger than the mass of the photopolymerization initiator.

The following describes a method of producing the light reflection layer used in the present invention by using the above-described cholesteric liquid crystal. In such a method, for example, a necessary amount of a chiral agent causing right-handed or left-handed helical orientation is added to a nematic liquid crystal monomer containing a polymerizable group to reflect light having a desired wavelength. Subsequently, this mixture is dissolved into a solvent, and then a photopolymerization initiator is added. Such a solvent is not particularly limited as long as the solvent dissolves the liquid crystal monomer and the chiral agent in use and the like. The solvent is, for example, cyclopentanone, toluene, methyl ethyl ketone, or methyl isobutyl ketone, and is preferably, for example, cyclopentanone or toluene. Thereafter, this solution is coated on a plastic film such as a triacetylcellulose (TAC) film, an acrylic film, a polycarbonate film, a polyvinyl chloride film, a polyolefin film, or a polyethylene terephthalate (PET) film so that the thickness thereof is uniform as possible, and then is left to stand for a constant time under such a temperature condition that cholesteric liquid crystal is obtained on the plastic film and oriented at a desired helical pitch, preferably at 40 to 150°C while the solvent is removed by heating. In this case, when orientation processing such as rubbing or stretching is performed on the surface of the plastic film before the application, the cholesteric liquid crystal can be more uniformly oriented, and the haze value as the film can be reduced. Subsequently, while this orientation state is held, the film is irradiated with ultraviolet from, for example, a high-pressure mercury lamp to fix the orientation of the cholesteric liquid crystal, thereby obtaining the cholesteric liquid crystal layer forming the light reflection layer used in the present invention. When a chiral agent that causes right-handed helical orientation is selected, the light reflection layer is a light reflection layer R that selectively reflects right-handed circularly polarized light. When a chiral agent that causes left-handed helical orientation is selected, the light reflection layer is a light reflection layer L that selectively reflects left-handed circularly polarized light. This phenomenon that particular circularly polarized light is selectively reflected is referred to as selective reflection, and a selectively reflected wavelength band is referred to as a selective reflection region.

When a plurality of light reflection layers are laminated, the method of laminating the light reflection layers is not particularly limited. The light reflection layers may be directly laminated, but preferably laminated by using an adhesive agent or a bonding agent. The adhesive agent is an acrylic or rubber adhesive agent, but is preferably the acrylic adhesive agent, which allows easy adjustment of bonding and holding properties. The bonding agent is an ultraviolet curable resin composition or a heat curable resin composition. When the bonding agent is an ultraviolet curable resin, a composition as a mixture of two or more monomers containing an acryloyl group or an epoxy group can be cured through ultraviolet irradiation together with a photopolymerization initiator, thereby achieving bonding between the light reflection layers. When the bonding agent is a heat curable resin composition, a composition as a mixture of two or more monomers containing an epoxy group can be cured through heating together with an acid catalyst, thereby achieving bonding between the light reflection layers. Alternatively, a composition of two or more monomers or polymers containing an amino group, a carboxyl group, or a hydroxyl group can be cured through heating together with a compound containing an isocyanate group or melamine, thereby achieving bonding between the light reflection layers.

### (Linear polarization element layer)

The optical film for eyewear according to the present invention may further include at least one linear polarization element layer. Specifically, the linear polarization element layer is disposed on the eyewear wearer side of the above-described light reflection layer with respect to the wearer side, in other words, on the back side. A linear polarization element used in the linear polarization element layer is not particularly limited, but is typically a PVA (polyvinyl alcohol) polarization film. The method of manufacturing the linear polarization element is not particularly limited, but the linear polarization element may be manufactured by, for example, adsorbing a dichromatic pigment to a polymer film formed of polyvinyl alcohol or a derivative thereof and then uniaxially stretching the film to orient the dichromatic pigment. The dichromatic pigment is, for example, a well-known iodine complex or dichromatic dye, but is preferably dichromatic dye, particularly preferably a direct dye made of an azo pigment containing a sulfonate group in terms of thermal resistance.

It is known that light reflected at, for example, a water surface, a road surface, or a snow surface contains a large amount of linearly polarized light component oscillating in a direction orthogonal to an incident surface, typically called s-polarized light. In the optical film for eyewear, when the linear polarization element is disposed on the back side of the optical film, incident s-polarized light is absorbed by the linear polarization element. Thus, the absorption axis of the linear polarization element is preferably disposed so that the polarization axis of the s-polarized light incident on the optical film for eyewear is parallel to the absorption axis of the linear polarization element. With this configuration, the s-polarized light is absorbed by the linear polarization element, thereby further enhancing the light-shielding function of the optical film for eyewear.

The optical film for eyewear according to the present invention has a high polarization degree in the vicinity of the central reflected wavelength (reflected wavelength region) of the light reflection layer. The polarization degree is the ratio of the light intensity of a polarized component relative to the whole light intensity, and a higher polarization degree means higher polarization performance. When the light reflection layer is used, the polarization degree does not take a high value after conversion into a luminosity-corrected polarization degree, which is typically used, but tends to have a high value in a particular wavelength. For example, when the light reflection layer has a central reflected wavelength of 480 nm, the optical film has a high polarization degree near 480 nm, and thus can more efficiently cut blue light and have further improved light-shielding function as eyewear. When the optical film further includes the linear polarization element layer, the luminosity-corrected polarization degree takes a high value, and thus can be applied to, for example, polarization sunglasses having a higher blue light cut rate.

### (Optical laminate)

An optical laminate can be obtained by sandwiching the optical film according to the present invention between two support bodies. In other words,, the optical laminate according to the present invention includes a first support body, a second support body, and the above-described optical film for eyewear disposed between the first support body and the second support body. Both or one of the first support body and the second support body used in the present invention is preferably each a substrate made of a plastic material. Examples of the plastic material include resin such as polycarbonate, polyamide, and triacetylcellulose (TAC). In eyewear such as sunglasses and goggles, for which impact resistance and thermal resistance are requested, the plastic material is preferably made of polycarbonate, more preferably made of aromatic polycarbonate containing bisphenol A. To easily obtain visibility, the entire light beam transmittance of each support body is preferably equal to or higher than 70%, more preferably equal to or higher than 80%, still more preferably equal to or higher than 85%. At manufacturing of each layer included in the optical film, when optimum processing temperature is low, the support bodies are preferably made of, for example, aromatic polycarbonate and PCC composition (wholly alicyclic polyester composition), or polyamide having a glass transition temperature of 130°C or lower. The plastic materials of the first support body and the second support body may be identical or different.

The method of laminating the light reflection layer and the linear polarization element included in the optical film according to the present invention and the method of sandwiching the optical film between the first and second support bodies are not particularly limited. For example, the layers and the support bodies may be directly laminated, but are preferably laminated with a bonding layer interposed therebetween to obtain high bonding power. The bonding layer may be made of any of a hot-melt bonding agent and a curable bonding agent. Typically, the curable bonding agent may be made of acrylic resin material, urethane resin material, polyester resin material, melamine resin material, epoxy resin material, or silicone material. An adhesive agent may be used in place of the bonding agent. The adhesive agent is not particularly limited, but may be, for example, acrylic adhesive agent or a rubber adhesive agent.

### (Eyewear)

The optical film or the optical laminate according to the present invention thus obtained is shaped into a desired shape appropriate for the eyewear and fixed to, for example, a frame, thereby obtaining light-shielding function equipped eyewear (hereinafter also simply referred to as "eyewear") including the optical film or the optical laminate according to the present invention, such as glasses sunglasses, goggles, or a helmet visor. For example, in a case of glasses, the optical laminate is punched into a desired shape and then provided with bending. The bending is not limited to a particular method, but the optical laminate may be provided with bending into a spherical surface shape or an aspherical surface shape in accordance with a desired shape. A product obtained through the bending may be further provided with resin injection molding. This can prevent image distortion due to unevenness in the thickness of the optical laminate, and achieve particularly excellent effects on impact resistance, appearance, and eye fatigue of a lens with no focal position refractive power. The injected resin is preferably material same as that of a layer with which the resin contacts to prevent appearance degradation due to refractive index difference. For example, a hard coat and an antireflection film may be provided on the outer surface of the optical laminate as appropriate. Glasses can be produced by fixing the optical laminate provided with the bending or the injection molding to a frame and the like through, for example, lens grinding, boring, and fastening by screw.

The optical film or the optical laminate according to the present invention may be laminated on, for example, a glass substrate by using an adhesive agent or the like, thereby obtaining eyewear such as glasses. The optical film or the optical laminate according to the present invention may be applied over existing glasses or the like.

The optical film, the optical laminate, and the light-shielding function equipped eyewear according to the present invention may further include a coloring layer. The coloring layer is disposed on the wearer side of at least the light reflection layer with respect to the eyewear wearer side, in other words, on the back side. The coloring layer may be provided to an optional layer such as an adhesion layer, a support body, or an injection molding resin. When the coloring layer is provided, the light-shielding function equipped eyewear can be obtained in various designabilities with metallic appearance provided by the optical film. Thus, it is possible to provide excellently fashionable eyewear such as mirror-like eyewear.

The light-shielding function equipped eyewear according to the present invention is optimally applied to protection glasses for reducing glare after a cataract operation, in particular. In eyewear using the optical film according to the present invention, the optical film includes at least one light reflection layer including a cholesteric liquid crystal layer having a central reflected wavelength in a wavelength region of 400 nm to 500 nm inclusive. Thus, when the eyewear according to the present invention to which such an optical film is applied is used as protection glasses after a cataract operation, glare can be reduced while blue light is efficiently cut.

The eyewear according to the present invention to which the optical film further including the linear polarization element layer is applied has polarization performance at a particular wavelength region. Accordingly, glare after a cataract operation can be further reduced for light bounced at, for example, a road surface, and thus characteristics more excellent than that of existing protection glasses can be obtained. Furthermore, visible light having a wavelength longer than 500 nm is cut when glare is reduced with existing protection glasses, which leads to the problem of reduction of visible light transmittance as glass lenses. However, the eyewear according to the present invention including the optical film or optical laminate described above can reduce glare without reduction of visible light transmittance.

The light-shielding function equipped eyewear is not limited to protection glasses after a cataract operation but is optimum for application for cutting blue light, such as blue light cut glasses for preventing eye fatigue due to blue light emitted from electronic devices and communication instruments such as a personal computer and a smartphone.

### [Examples]

The present invention will be exemplarily described below in detail with reference to examples. In the examples, the word "parts" means "parts by weight". The present invention is not limited to the examples described below.

### <Preparation of cholesteric liquid crystal coating liquid>

Formulation examples 1 to 4 of cholesteric liquid crystal coating liquid having compositions listed in Table 1 were prepared.

**[Table 1]**

| Material (kind) | Material name (manufacturer) | Amount added (parts by weight) | | | |
|---|---|---|---|---|---|
| | | Formulation example 1 | Formulation example 2 | Formulation example 3 | Formulation example 4 |
| Polymerizable liquid crystal monomer | LC242(BASF) | 20.00 | 20.00 | 20.00 | 20.00 |
| Chiral agent | LC756(BASF) | 1.54 | 1.43 | - | - |
| Chiral agent | Described in Compound 1 | - | - | 4.32 | 4.00 |
| photopolymerization initiator | IrgacureTPO(BASF) | 1.00 | 1.00 | 1.00 | 1.00 |
| Solvent | Cyclopentanone | 80.00 | 80.00 | 80.00 | 80.00 |

Chiral agent: Compound 1 (exemplary compound 2-1 disclosed in Japanese Patent Application Laid-Open No. 2002-179668)

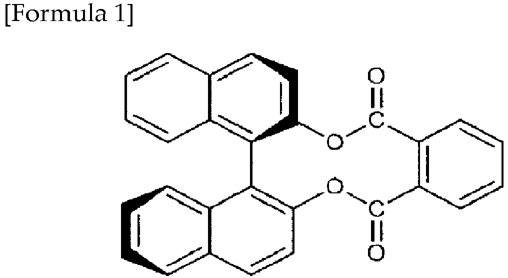

### [Example 1]

### <Production of optical film>

The cholesteric liquid crystal coating liquid of Formulation example 1 was used to produce a light reflection layer through the following procedures. A used plastic substrate was a PET film (the product name "A4100" and a thickness of 50 µm with no basecoat layer) manufactured by Toyobo Co., Ltd.
(1) Coating liquid of Formulation example 1 was coated on the PET film at room temperature by using a wire bar so that a film after drying had a thickness of 1.2 µm, thereby forming a coated film.
(2) The obtained coated film was heated at 150°C for five minutes to remove a solvent, thereby obtaining a cholesteric liquid crystal phase. Then, the cholesteric liquid crystal phase was subjected to UV irradiation at power of 120 W for 5 to 10 seconds by a high-pressure mercury lamp (manufactured by HARISON TOSHIBA LIGHTING Corporation) to fix the cholesteric liquid crystal phase, thereby forming the light reflection layer on the PET film.
(3) The light reflection layer thus obtained was peeled off the PET film, thereby producing the optical film according to the present invention including the light reflection layer R1 that reflects right-handed circularly polarized light.

### [Example 2]

### <Production of optical film>

The cholesteric liquid crystal coating liquids of Formulation examples 1 and 3 were each used to produce a light reflection layer through the following procedures. A used plastic substrate was a PET film (the product name "A4100" and a thickness of 50 µm with no basecoat layer) manufactured by Toyobo Co., Ltd.
(1) The coating liquid of Formulation example 3 was coated on the PET film at room temperature by using a wire bar so that a film after drying has a thickness of 1.2 µm, thereby forming a coated film.
(2) The obtained coated film was heated at 150°C for five minutes to remove a solvent, thereby obtaining a cholesteric liquid crystal phase. Then, the cholesteric liquid crystal phase was subjected to UV irradiation at power of 120 W for 5 to 10 seconds by a high-pressure mercury lamp (manufactured by HARISON TOSHIBA LIGHTING Corporation) to fix the cholesteric liquid crystal phase, thereby forming the light reflection layer on the PET film.
(3) In this manner, a light reflection layer L1 that reflects left-handed circularly polarized light was formed on the PET film.
(4) A light reflection layer R1 was formed on the PET film through a procedure similar to that in Example 1.
(5) The light reflection layer R1 and the light reflection layer L1 thus obtained were laminated together by using an acrylic adhesive agent (manufactured by Nippon Kayaku Co., Ltd. and the product name "PTR104" and a thickness of 25 µm).
(6) The PET film outside each light reflection layer was peeled off, thereby producing the optical film according to the present invention including the light reflection layer R1 and the light reflection layer L1.

### [Example 3]

### <Production of optical film>

The cholesteric liquid crystal coating liquids of Formulation examples 2 and 4 were each used to produce a light reflection layer through the following procedures. A used plastic substrate was a PET film (the product name "A4100" and a thickness of 50 µm with no basecoat layer) manufactured by Toyobo Co., Ltd.
(1) The coating liquid of Formulation example 2 was coated on the PET film at room temperature by using a wire bar so that a film after drying has a thickness of 1.8 µm, thereby forming a coated film.
(2) The obtained coated film was heated at 150°C for five minutes to remove a solvent, thereby obtaining a cholesteric liquid crystal phase. Then, the cholesteric liquid crystal phase was subjected to UV irradiation at power of 120 W for 5 to 10 seconds by a high-pressure mercury lamp (manufactured by HARISON TOSHIBA LIGHTING Corporation) to fix the cholesteric liquid crystal phase, thereby forming the light reflection layer on the PET film.
(3) In this manner, a light reflection layer R2 that reflects right-handed circularly polarized light was formed on the PET film.
(4) A light reflection layer L2 was formed on the PET film through a procedure similarly to those in (1) to (3) except that the coating liquid of Formulation example 4 was used.
(5) The light reflection layer R2 and the light reflection layer L2 thus obtained were laminated together by using an acrylic adhesive agent (manufactured by Nippon Kayaku Co., Ltd. and the product name "PTR104" and a thickness of 25 µm).
(6) The PET film outside each light reflection layer was peeled off, thereby producing the optical film according to the present invention including the light reflection layer R2 and the light reflection layer L2.

### [Comparative Example 1]

A commercially available medical filter lens (cataract protection glasses) LHV26-005-3 (yellow SY15) (optical lens) manufactured by OPT MEDICAL was used.

### [Comparative Example 2]

A commercially available medical filter lens (cataract protection glasses) LHV26-005-3 (yellow SY50) (optical lens) manufactured by OPT MEDICAL was used.

### [Comparative Example 3]

A commercially available medical filter lens (cataract protection glasses) LHV26-005-3 (brown NA50) (optical lens) manufactured by OPT MEDICAL was used.

### [Method of evaluating characteristics]

### <Central reflected wavelength and minimum transmittance of the optical film>

The optical films of Examples 1 to 3 produced were measured by using spectrophotometer UV-3600 manufactured by Shimadzu Corporation. The light source was a C light source. The central reflected wavelength [nm] of each optical film was set to be the average value of wavelengths at which spectral transmittance is 75% on the short wavelength side and the long wavelength side in the reflection band of the light reflection layer in Example 1, the average value of wavelengths at which spectral transmittance is 60% on the short wavelength side and the long wavelength side in the reflection band of the light reflection layer in Example 2, and the average value of wavelengths at which spectral transmittance is 50% on the short wavelength side and the long wavelength side in the reflection band of the light reflection layer in Example 3. The minimum value of the transmittance in the reflection band was used as the minimum transmittance [%].

### <Visible light average transmittance of optical film and lens>

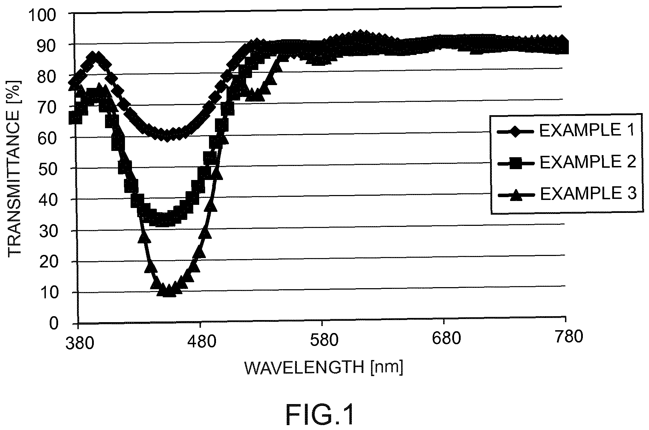

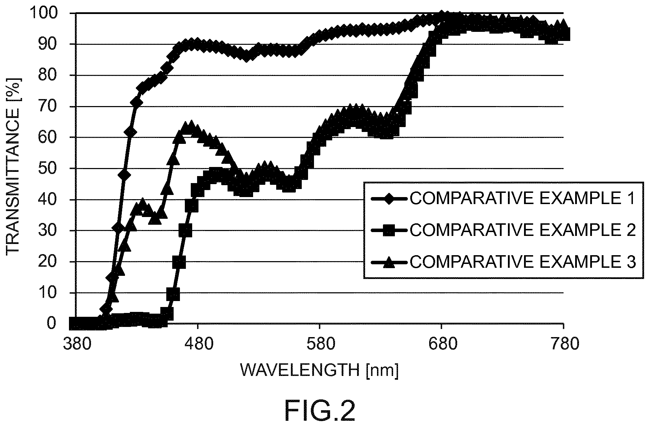

The transmittance of each of the optical films of Examples 1 to 3 and the optical lenses of Comparative Examples 1 to 3 was measured by using spectrophotometer UV-3600 manufactured by Shimadzu Corporation. The light source was a C light source. Figs. 1 and 2 illustrate spectrum data of the transmittance thus obtained. The values of the transmittance measured with the optical films and the optical lenses were used to calculate a Y value as a tristimulus value according to JIS Z 8722:2009, and the Y value was set to be the visible light average transmittance [%] of the optical film. The higher Y value means that visible light is more likely to reach the wearer and brighter eyesight is achieved while too dark eyesight is avoided.

### <Blue light cut rate of optical film and lens>

The blue light cut rate was obtained in the optical films of Examples 1 to 3 and the optical films of Comparative Examples 1 to 3. Specifically, the blue light cut rate in a wavelength of 420 to 495 nm was calculated according to a blue light hazard described in Appendix C of JIS T 7333:2005. The higher blue light cut rate means that blue light is more unlikely to reach the wearer and glare is further reduced.

### <Sensory evaluation>

The degree of glare reduction and the luminance of eyesight were evaluated in sensory evaluation of the optical films of Examples 1 to 3 and the optical lenses of Comparative Examples 1 to 3. The evaluation was performed at four levels of "excellent" (double circle), "good" (circle), "bad" (triangle), and "poor" (cross).

Table 2 lists evaluation results of Examples 1 to 3 and Comparative Examples 1 to 3.

**[Table 2]**

| | Example 1 | Example 2 | Example 3 | Comparative Example 1 | Comparative Example 2 | Comparative Example 3 |
|---|---|---|---|---|---|---|
| Central reflected wavelength [nm] | 456 | 455 | 459 | - | - | - |
| Minimum transmittance [%] | 60.1 | 32.9 | 10.2 | - | - | - |
| Visible light average transmittance [%] | 86.1 | 82.8 | 78.5 | 90.0 | 51.4 | 55.5 |
| Blue light cut rate [%] | 32.3 | 60.0 | 75.5 | 18. 9 | 82.1 | 51.9 |
| Glare reduction degree | ○ | ○ | ⊚ | Δ | ⊚ | ○ |
| Eyesight luminance degree | ⊚ | ⊚ | ○ | ⊚ | × | × |

As indicated in Table 2, the optical films of Examples 1 to 3 each had a high blue light cut rate as an index of reduction of glare after a cataract operation, which indicates a high antiglare effect, and also had a high visible light average transmittance, which indicates maintenance of the luminance of eyesight. In particular, the optical films of Examples 2 and 3 each had significantly high blue light cut rate and an excellent function of efficiently cutting blue light. On the other hand, the optical lens of Comparative Example 1 had a high visible light average transmittance and maintained the luminance of eyesight, but had a low blue light cut rate and was inferior in an antiglare effect. The optical lenses of Comparative Examples 2 and 3 each had a high blue light cut rate and achieved a high antiglare effect, but had a low visible light average transmittance, and as a result, did not achieve a bright visual field. This indicates that the optical films of Examples 1 to 3 can be used to provide light-shielding function equipped eyewear optimum for protection glasses after a cataract operation.

### Industrial Applicability

A light-shielding function equipped optical film for eyewear that is capable of efficiently cutting blue light while avoiding too dark eyesight and is optimum mainly for protection glasses after a cataract operation, and an optical laminate and a light-shielding function equipped eyewear using the light-shielding function equipped optical film for eyewear can be provided by using a light-shielding function equipped optical film for eyewear according to the present invention.

## Claims

1. A light-shielding function equipped optical film for eyewear **characterized by** comprising at least one light reflection layer including a cholesteric liquid crystal layer having a central reflected wavelength in a wavelength region of 400 nm to 500 nm inclusive, wherein
the at least one light reflection layer is disposed on an outermost side with respect to an eyewear wearer side, and
the light-shielding function equipped optical film for eyewear has a visible light average transmittance equal to or higher than 60%.

2. The light-shielding function equipped optical film for eyewear according to claim 1, wherein the at least one light reflection layer includes at least one light reflection layer R including a cholesteric liquid crystal layer having right-handed helical orientation, and at least one light reflection layer L including a cholesteric liquid crystal layer having left-handed helical orientation.

3. The light-shielding function equipped optical film for eyewear according to claim 1 or 2, further comprising at least one linear polarization element layer, wherein
the linear polarization element layer is disposed on the eyewear wearer side of the at least one light reflection layer with respect to the wearer side.

4. An optical laminate comprising:
a first support body,
a second support body, and
the light-shielding function equipped optical film for eyewear according to any one of claims 1 to 3 disposed between the first support body and the second support body.

5. The optical laminate according to claim 4, wherein both or one of the first support body and the second support body is a substrate formed of a plastic material.

6. A light-shielding function equipped eyewear comprising the optical film according to any one of claims 1 to 3 or the optical laminate according to claim 4 or 5.
